# FASCICULE DE BREVET EUROPEEN

(11) **EP 3 113 022 B1**
(45) Date de publication et mention de la délivrance du brevet: **03.11.2021**
(21) Numéro de dépôt: 16177298.3
(22) Date de dépôt: 30.06.2016
(51) Int. Cl.: G06F 9/48

(54) **MÉCANISME D'ORDONNANCEMENT DE TRAITEMENTS PAR LOT**
PLANUNGSMECHANISMUS VON BATCHVERARBEITUNGEN
BATCH-PROCESSING SCHEDULING MECHANISM

(30) Priorité: 02.07.2015 FR 1556274
(43) Date de publication de la demande: 04.01.2017
(73) Titulaire: Bull S.A.S., 78340 Les Clayes-sous-Bois (FR)
(72) Inventeur: AIELLO, Damien, 38500 La Buisse (FR); DEMEILLIEZ, Bruno, 38330 Montbonnot Saint Martin (FR); GERMAIN, Christophe, 38100 Grenoble (FR)
(74) Mandataire: Cabinet Camus Lebkiri

(56) Documents cités:
- US-A1- 2005 132 167
- US-A1- 2005 278 703
- US-A1- 2009 089 772
- US-A1- 2009 158 286
- US-A1- 2014 075 442

## Description

### DOMAINE TECHNIQUE DE L'INVENTION

La présente invention concerne le domaine des traitements par lot (« batch » en anglais) et plus particulièrement de l'optimisation de leur ordonnancement.

On définit l'ordonnancement comme étant l'ordre d'exécution des différents traitements. Cet ordonnancement est calculé en fonction de règles et/ou de prérequis.

Dans la suite une grille informatique (en anglais, grid) désigne une infrastructure virtuelle constituée d'un ensemble de ressources informatiques potentiellement partagées, distribuées, hétérogènes, délocalisées et autonomes.

Une grille est en effet une infrastructure, c'est-à-dire des équipements techniques d'ordres matériel et logiciel. Cette infrastructure est qualifiée de virtuelle car les relations entre les entités qui la composent n'existent pas sur le plan matériel mais d'un point de vue logique.

Une grille garantit des qualités de service non triviales, c'est-à-dire qu'elle se distingue des autres infrastructures dans son aptitude à répondre adéquatement à des exigences (accessibilité, disponibilité, fiabilité, ...) compte tenu de la puissance de calcul ou de stockage qu'elle peut fournir.

Dans la suite, le système de traitement transactionnel ou STT (domaine informatique) est un système capable d'exécuter un ensemble d'opérations unitaires dans un contexte transactionnel donné. Le STT doit pouvoir garantir à tout moment les propriétés inhérentes à une transaction informatique pour les données qu'il gère.

L'expression « traitement transactionnel » est la traduction en français de l'anglais transaction processing (TP).

Dans la suite, une métrique logicielle est une compilation de mesures issues des propriétés techniques ou fonctionnelles d'un logiciel.

Elles peuvent être simples ou plus complexes. Elles se composent toujours de mesures dites « de base », par exemple le nombre de lignes de code, la complexité cyclomatique, le nombre de commentaires.

Dans la suite, une sonde informatique est un logiciel associé à équipement qui permet d'effectuer, de gérer et faire remonter vers un équipement de surveillance des mesures destinées à informer de la qualité des flux réseau ou de la qualité de service (QoS).

Dans la suite, un traitement par lots (batch processing en anglais) est un enchaînement automatique d'une suite de commandes (processus) sur un ordinateur sans intervention d'un opérateur.

Une fois que ce processus est terminé (quel que soit le résultat) l'ordinateur traite le lot suivant. Le traitement des lots se termine une fois que tous les lots de la pile (queue) ont été exécutés.

Les traitements par lots sont surtout utilisés pour des tâches automatisées, notamment pour la gestion des comptes sur le parc informatique d'une entreprise, d'une université... Les travaux lancés en lots n'utilisent que les cycles processeur non utilisés par les travaux interactifs tels que les traitements transactionnels. Les lots ont donc toujours une priorité d'exécution plus basse que les travaux interactifs, mais en revanche un temps d'exécution (time slice) plus élevé que les travaux interactifs de façon à rester en mémoire principale le plus longtemps possible. Pourquoi le time slice est-il plus généreux pour un lot que pour un travail interactif ? Parce que lors d'un ordre de lecture de la base de données, le système charge dans le buffer plusieurs slots de façon à faire le moins possible d'accès disque, sachant qu'un accès disque provoque immédiatement une purge sur disque du lot qui devra attendre de revenir en mémoire pour continuer à s'exécuter. Ainsi les traitements par lot peuvent être très gourmands en ressources matérielles. Il est ainsi très fréquent que pour des raisons pratiques ou économiques que ces traitements soient planifiés la nuit, les WE ou durant des périodes de faible activité des traitements transactionnels. Durant les périodes d'activité intense ces travaux sont mis en pile ou queue dans un « fichier entrée lot » (batch file).

L'exécution du fichier d'entrée lot peut générer des actions aussi variées que la mise à jour d'une base de données, la réconciliation de transactions financières, l'envoi de mails à l'utilisateur d'un traitement transactionnel nécessitant par la suite un traitement batch, ou encore la production d'un ou plusieurs fichier de sortie (output file) à utiliser dans d'autres tâches (batch ou autres).

Cependant l'évolution constante des systèmes d'information, et par rebond la multiplication des traitements par lot, tend à « surcharger » et « surpeupler » les périodes durant lesquelles les traitements peuvent s'exécuter. Il est donc nécessaire d'effectuer une planification.

### ARRIERE-PLAN TECHNOLOGIQUE DE L'INVENTION

Il est connu par la demande de brevet US 2014/0075442 un procédé pour programmer l'exécution d'une pluralité de traitements par lots par un système informatique, le procédé comprenant les étapes consistant à :
- lire une ou plusieurs contraintes qui entravent l'exécution de la pluralité des travaux par lots par le système informatique, y compris les contraintes d'un accord de niveau de service (SLA) et une charge habituelle sur le système informatique;
- regrouper la pluralité de travaux par lots dans au moins une fréquence de fonctionnement qui comprend au moins une tâche de traitement par lot;
   le réglage de la au moins fréquence de fonctionnement à une première fréquence d'exécution;
   le calcul d'une charge générée par chaque tâche de traitement par lot (job batch) dans la première fréquence de fonctionnement sur le système informatique basé sur l'heure de début de chaque tâche de traitement par lot (job batch) pour se protéger contre le pire des cas dans lesquels un certain nombre d'opérations par lots dans une telle période de temps donnée est supérieure à un nombre moyen de lot d'opérations attendues au cours de la plus achalandée de cette période de temps donnée; et
- déterminer un temps de démarrage optimisé pour chaque tâche de traitement par lot (job batch) dans la première fréquence de fonctionnement qui répond à une ou plusieurs contraintes et qui distribue la charge de chaque travail des lots sur le système informatique en utilisant la charge calculée de chaque travail de lot et la charge habituelle, les une ou plusieurs contraintes, y compris au moins une contrainte d' accord de niveau de service (SLA).

Ce procédé nécessite une fréquence de fonctionnement ce qui ne permet pas d'optimiser en fonction des contraintes, notamment des ressources réellement utilisées pour le traitement batch envisagé.

Il est connu des planificateurs de batch (batch scheduler) mais à ce jour, aucune solution ne permet d'optimiser l'ordonnancement des traitements par lot sur une infrastructure.

Le document de brevet US 2005/132167 A1 (LONGOBARDI GIUSEPPE [IT]) 16 juin 2005 (2005-06-16) est un autre document de l'art antérieur pertinent.

La présente invention consiste à optimiser le positionnement dans le temps des traitements par lot indépendamment d'une fréquence, en se basant sur leurs contraintes d'exécution, les ressources qu'ils consomment et les ressources disponibles sur l'infrastructure qu'ils utilisent.

Un premier but de l'invention consiste en un dispositif selon la revendication indépendante 1.

Selon une autre particularité de l'invention, le référentiel réglementaire est constitué par l'utilisation d'une interface homme-machine (20) permettant de créer des règles d'exécution applicables pour chaque traitement par lot Ti et de les enregistrer en mémoire pour constituer le référentiel réglementaire. Selon une autre particularité de l'invention, le référentiel réglementaire est constitué d'au moins un tableau matriciel mémorisé correspondant à chaque traitement Ti appliqué sur une ou plusieurs ressources d'une machine Mj, dont le nombre de ressource défini une dimension du tableau matriciel, le nombre de plages horaires affectées définissant une autre dimension du tableau matriciel, et les pourcentages d'utilisation de la ressource, des valeurs « 101 » représentatives de la non activité, « 0 » de l'activité de la ressource constituant les coefficients du tableau matriciel ou « 99 » de la non compatibilité du traitement avec un autre traitement constituant le coefficient d'une ligne ou colonne supplémentaire .

Selon une autre particularité de l'invention, le référentiel ressource est constitué à l'aide d'une interface homme-machine permettant de créer des règles de pourcentages d'utilisation de chaque ressources d'une machine applicables pour chaque traitement par lot et de les enregistrer en mémoire pour constituer le référentiel ressource.

Selon une autre particularité de l'invention, le référentiel ressource est constitué d'un tableau matriciel mémorisé pour chaque machine Mj dont une dimension est constitué par le nombre des différentes ressources de la machine, et l'autre dimension par le nombre de plage horaire d'utilisation de la machine et les coefficients définissant en fonction de la ressource et de la plage horaire l'état les taux d'occupations de chaque équipement de la machine et pour les autres coefficient « 0 » l'état non occupé de la ressource.

Selon une autre particularité de l'invention, I'IHM qui intervient dans la définition du Référentiel règlementaire permet de :
- Définir et mémoriser les restrictions horaires de chaque traitement.
- Définir et mémoriser les limites maximales acceptables de consommations de ressources pour chaque serveur composant la chaine de liaison
- Définir et mémoriser les règles d'ordonnancement inter traitements

Selon une autre particularité de l'invention, les règles définies peuvent être aussi variées et différentes que :
- le traitement A doit s'exécuter avant le traitement B,
- le traitement C doit démarrer avant une heure précise,
- le traitement D doit se terminer avant une heure précise,
- la consommation de la ressource X de la machine 1 ne peut dépasser Y %,
- la machine 2 doit être entièrement disponible pour les actions utilisateur à partir d'une heure précise

Selon une autre particularité de l'invention, le dispositif comporte une deuxième Interface Homme Machine (IHM 2) permettant de définir les sondes de consommation sur chaque machines qui remontent les métriques provenant de l'utilisation des ressources de la machine, ainsi que les seuils d'acceptabilité associé à chaque sonde.

Un autre but de l'invention est de proposer un procédé permettant de remédier à un ou plusieurs inconvénients de l'art antérieur.

Ce but est atteint par un procédé d'optimisation des plannings de traitements par lot sur une infrastructure informatique comportant une pluralité de machines selon la revendication indépendante 9.

Selon une autre particularité de l'invention, la construction du plan d'exécution s'effectue :
- à partir du référentiel ressource et réglementaire, en déterminant le plan d'exécution optimum visant à réduire le temps global d'exécution tout en maximisant l'utilisation des ressources disponibles.
- et en déterminant le niveau de ressource théoriquement utilisées lors de l'exécution de l'ensemble du plan

Selon une autre particularité de l'invention, la vérification s'effectue :
en comparant le niveau utilisé de ressources à celui calculé précédemment pour tenir compte de l'incidence de l'exécution des traitements en parallèle avec si nécessaire une modification du référentiel réglementaire si certaines règles ne sont pas respectées lors de l'exécution.

### DESCRIPTION DES FIGURES ILLUSTRATIVES

D'autres caractéristiques et avantages de l'invention ressortiront à la lecture de la description qui suit, en référence aux figures annexées, qui illustrent :
- la figure 1, une vue schématique du mécanisme d'ordonnancement de traitement par lot selon un mode de réalisation de l'invention ;
- la figure 2, les étapes d'un procédé de mesure d'empreinte de traitement par lot sur l'infrastructure informatique ;
- la figure 3a, une matrice traitement T1 mémorisée en mémoire ;
- la figure 3b un exemple de matrice traitement T1 avec une ligne supplémentaire par rapport au nombre de ressources ;
- la figure 3c un exemple de matrice traitement T2 avec une ligne supplémentaire comportant la même information que celle de T1 dans la ligne supplémentaire, par rapport au nombre de ressources pour définir l'incompatibilité de son traitement en même temps que T1 ;
- la figure 4 un exemple de matrice machine Mj ;
- la figure 5 un exemple des étapes de construction du plan d'exécution sur une machine ;
- les figures 6a, 6b, 6c, 6d et 6e montrent des exemples de cinq définitions de matrices possibles pour un traitement T1.

Pour plus de clarté, les éléments identiques ou similaires sont repérés par des signes de référence identiques sur l'ensemble des figures.

### DESCRIPTION DES MODES DE REALISATION PREFERES DE L'INVENTION

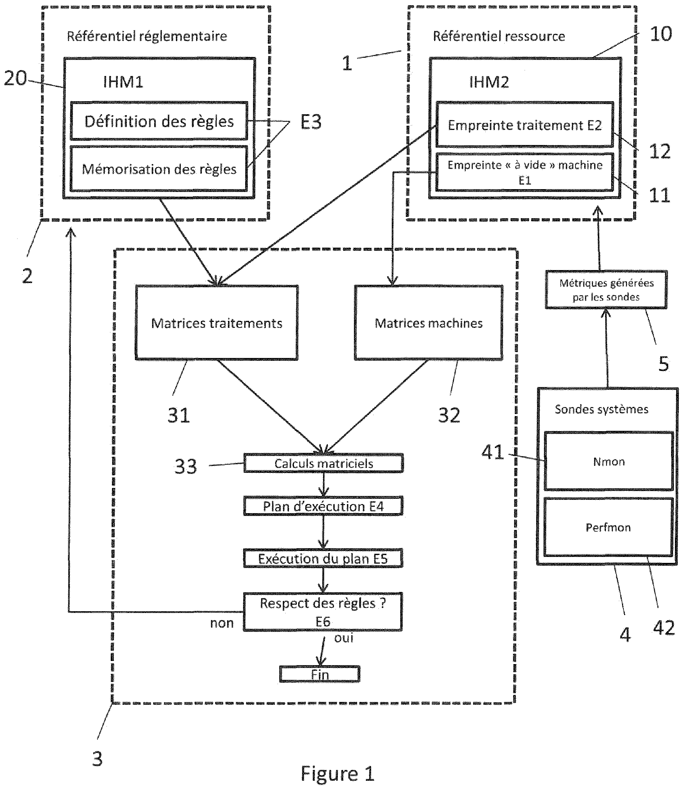

Un exemple de réalisation de l'invention est illustré à la figure 1 et cet exemple représente l'architecture d'un dispositif comprenant au moins une machine informatique et un logiciel pour mettre en œuvre un mécanisme de création de plannings, de traitements par lot, optimisés pour une infrastructure informatique déterminée, ledit dispositif étant constitué par :
- un agencement matériel et logiciel de mémorisation d'un référentiel ressource (1) et réglementaire (2),
- un module de construction d'un planning d'exécution (3) optimisé avec l'ensemble des éléments collectés par le référentiel ressource (1) et dans le respect des règles d'exécution déterminées par le référentiel règlementaire (2).

Dans certains modes de réalisation, ledit référentiel ressource (1) est constitué par un agencement matériel et logiciel permettant la mesure, par des sondes de consommation (4), de l'empreinte à vide (11) de toutes les machines impactées par le ou les traitements par lot. L'empreinte à vide de chaque machine (11) est ainsi mesurée à l'aide de sondes systèmes (4) déployées pour l'occasion, les sondes Nmon (41) et Perfmon (42), sans qu'aucun traitement ne tourne.

Nmon est un outil qui permet entre autres d'afficher les stats CPU, mémoire, swap, réseau, des infos sur les utilisateurs, les groupes, les supports de stockages, sur l'utilisation du kernel, les processus les plus gourmands et sur tout un tas d'autres choses très utiles.

Perfmon ou Performance Monitor est un outil intégré pour monitorer les performances d'une machine et permettre d'obtenir un rapport complet en 60 secondes de n'importe quelle machine

Ledit référentiel ressource (1) est également constitué d'un agencement matériel et logiciel permettant d'une part la mesure, par des sondes de consommation, de l'empreinte de chaque traitement par lot (12) sur chaque machine, en soustrayant des consommations mesurées celles de l'empreinte à vide sur une même période et d'autre part le calcul de l'empreinte totale sur l'ensemble des machines que le (ou les) traitement(s) impacte(nt), puis la mémorisation de cette empreinte totale dans le référentiel ressource (1) .L'empreinte de chaque traitement sur chaque machine (12) est ainsi mesurée de façon identique à la mesure de l'empreinte à vide (11), et en exécutant les traitements un à un, de façon séquentielle.

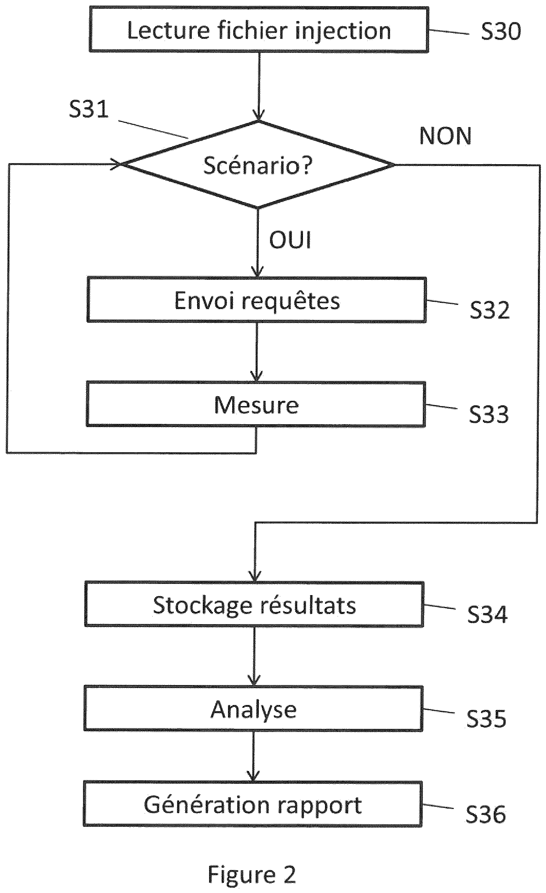

Afin de mesurer l'empreinte de chaque traitement sur chaque machine, un procédé de mesure d'empreinte de traitement par lot sur l'infrastructure informatique est mis en œuvre de la façon suivante (Figure 2). Lors d'une étape S30, un fichier d'injection, généré est reçu, ouvert et lu pour déterminer lors de l'étape S31, un premier scénario de traitement par lot à exécuter (OUI).

Les requêtes du scénario sont ensuite envoyées lors de l'étape S32, conformément au scénario et au paramétrage de celui-ci.

Une étape de mesure S33 est alors mise en œuvre pour récupérer des résultats de mesure d'empreinte.

L'étape S31 est alors de nouveau exécutée pour déterminer s'il reste encore un ou plusieurs scénarios à mettre en œuvre, si c'est le cas (OUI), les étapes S32 et S33 sont de nouveau mises en œuvre, sinon (NON), une étape S34 de stockage des résultats de mesure est exécutée.

Les résultats obtenus et stockés sont ensuite analysés lors de l'étape d'analyse S35 et un rapport d'empreinte (par exemple sous forme matriciel) de chaque traitement par lot est généré lors de l'étape S36.

Ces mesures s'effectuent grâce à un dispositif comportant une unité de mémoire (MEM). Cette unité de mémoire comporte une mémoire vive pour stocker de manière non durable des données de calcul utilisées lors de la mise en œuvre d'un procédé conforme à la description ci-dessus, selon divers modes de réalisation. L'unité de mémoire comporte par ailleurs une mémoire non volatile (par exemple du type EEPROM) pour stocker par exemple un programme d'ordinateur, selon un mode de réalisation, pour son exécution par un processeur (non représenté) d'une unité de traitement (PROC) du dispositif. Par exemple, l'unité de mémoire peut stocker un fichier de base « template » ou un fichier d'injection comme décrit précédemment. Le dispositif comporte par ailleurs une unité de communication (COM), par exemple pour recevoir des fichiers d'injection et/ou des résultats de mesure de performance, et/ou pour envoyer des requêtes vers une infrastructure informatique pour laquelle on veut définir l'empreinte totale des traitements. Ces mesures permettent de générer par exemple sous forme de tableau dont chaque ligne correspond à une ressource et chaque colonne à un traitement par lot et pour chaque traitement les consommations CPU, RAM, mémoire, disque, réseau etc.. en pourcentage des capacités de chaque ressource. Par ailleurs, dans certains modes de réalisation de l'invention, ledit référentiel réglementaire est constitué par une interface homme-machine (IHM 1) (20) permettant à l'utilisateur de créer des règles d'exécution applicables pour chaque traitement par lot et de les enregistrer en mémoire pour constituer ledit référentiel réglementaire (2).

Ladite interface homme-machine IHM 1 permet à l'utilisateur de :
- définir et mémoriser les restrictions horaires de chaque traitement,
- définir et mémoriser les limites maximums acceptables de consommations de ressources pour chaque serveur composant la chaîne de liaison,
- définir et mémoriser les règles d'ordonnancement inter-traitements.

En effet, pour chaque traitement, on peut disposer d'informations telles que :
- La durée du traitement,
- La consommation effectuée par le traitement sur chaque machine,
- L'ordre d'éxecution du traitement,
- L'heure de démarrage du traitement,
- L'heure de fin maximum du traitement.

Dans certains modes de réalisation, lesdites informations peuvent se retranscrire sous la forme d'une matrice traitement Ti mémorisée dans une mémoire (31), chaque ligne de la matrice traitement représente la consommation d'une ressource, et chaque valeur de la ligne représente la consommation de cette ressource pour une période horaire.

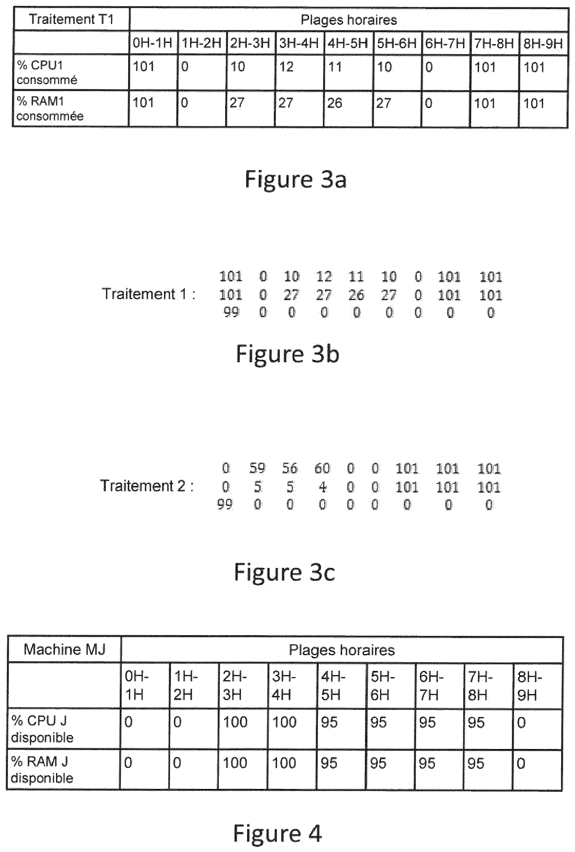

Par exemple, pour un traitement T1, la matrice traitement T1 mémorisée en mémoire (31) peut se présenter comme sur la figure 3a :
Les valeurs « 101 » de la figure 3a indiquent au module de construction de plan que le traitement T1 ne peut avoir lieu sur cette plage horaire. Les valeurs « 0 » indiquent au module de construction de plan que le traitement T1 peut éventuellement démarrer ou se poursuivre sur cette plage horaire.
Les autres valeurs 10, 27, 26, 12, 11, de la figure 3a indiquent au module de construction de plan les % de consommation de chaque ressource (CPU1, RAM1,...etc.) selon les plages horaires. Si le traitement T1 est déplaçable dans le temps, autant de matrices traitement Ti différentes pourront être construites et mémorisées en mémoire (31).

Dans certains modes de réalisation, deux traitements (Ti , Tl+n) par lot peuvent être liés. Ainsi, au moins deux matrices traitement (31) comportant au moins une ligne supplémentaire par rapport au nombre de ressources sont construites pour indiquer au module de construction de plan que les traitements sont liés.

Par exemple, afin d'éviter une règle définie, telle que le chevauchement d'au moins deux traitements T1 et T2 est interdit, l'utilisateur ajoute au moins une ligne à chaque matrice traitement, ladite ligne ne contenant plus la consommation d'une ressource pour les plages horaires mais une valeur identique (par exemple 99) dans la première colonne pour les deux ou plusieurs traitements concernés et indiquer au module de construction de plan que par exemple, le chevauchement des traitements T1 et T2 est interdit. Ainsi, de manière illustrative et non limitative, on obtient par exemple les matrices des figures 3b et 3c.

Selon cet exemple, le module de construction de plan d'exécution, déduira que les deux traitements ne peuvent s'exécuter simultanément car ils possèdent une troisième ligne identique au sein de leurs matrices (T1, fig. 3b;T2, fig.3a) traitement respectives. Il en serait de même si plusieurs matrice Ti,... Ti+n étaient construites avec la même ligne supplémentaire. Ainsi l'utilisateur va pouvoir par le choix des valeurs introduites dans les lignes des matrices décaler l'exécution d'un traitement après un autre, le faire démarrer à une plage horaire précise, le faire se terminer avant une autre plage horaire.

L'ensemble des matrices Ti ainsi constituées forment le référentiel réglementaire.

Dans certains modes de réalisation, les règles définies peuvent être aussi variées et différentes de sorte que une ou plusieurs des contraintes suivantes soient satisfaites :
- le traitement A doit s'exécuter avant le traitement B,
- le traitement C doit démarrer avant une heure précise,
- le traitement D doit se terminer avant une heure précise,
- la consommation de la ressource X de la machine 1 ne peut dépasser Y %,
- la machine 2 doit être entièrement disponible pour les actions utilisateur à partir d'une heure précise.

Ainsi l'utilisateur va créer autant de matrices que de traitements Ti et autant de matrices que de machines Mj appartenant à l'infrastructure informatique sur lesquelles s'exécuteront les traitements selon les règles ainsi définies. Dans certains modes de réalisation, le dispositif comporte une deuxième interface homme-machine (IHM 2) (10) permettant de définir les sondes de consommation (4) sur chaque machines qui remontent les métriques (5) provenant de l'utilisation des ressources de la machine, ainsi que les seuils d'acceptabilité associé à chaque sonde.

Ainsi, pour chaque machine, on peut disposer d'informations telles que :
- la consommation de ressource maximale,
- les éventuelles périodes blanches (plages horaires sans traitement).

Ces informations peuvent, de préférence, se retranscrire sous la forme d'une matrice Mj machine mémorisée dans une mémoire (32), chaque ligne de la matrice machine Mj représentant une ressource de la machine (CPU, RAM, ....etc.), chaque colonne de la matrice une plage horaire et chaque valeur présente dans une case de la ligne d'une ressource représentant la consommation de cette ressource pour la période horaire définie pour la colonne.

Par exemple, pour une machine Mj composée à titre d'exemple d'un CPU et de RAM, la matrice machine (Mj) peut se présenter comme sur la figure 4.

Les coefficients de valeur « 0 » indiquent des plages horaires sans traitement.

Les coefficients de valeurs 100, ou 95 indiquent les taux d'occupations maximum souhaités et respectifs de chaque équipement de la machine en fonction des plages horaires.

Il est bien entendu que la machine peut incorporer d'autres ressources ou équipements tels qu'un disque, des I/O, réseau,... etc. Ainsi le nombre de ligne des matrices traitement ou Machine évoluera en fonction des ressources à utiliser pour le traitement par lot.

Ces matrices MJ mémorisées en mémoire (32) constituent le référentiel ressource.

Par l'utilisation des matrices de traitements Ti et des matrices machines Mj sur lesquelles s'exécuteront les traitements le programme va pouvoir construire un plan d'exécution.

Afin de construire un plan d'exécution, le module de construction de plan lance sur une machine des calculs matriciels (33) entre les matrices traitements mémorisées en mémoire (31) et les matrices machines mémorisées en mémoire (32).

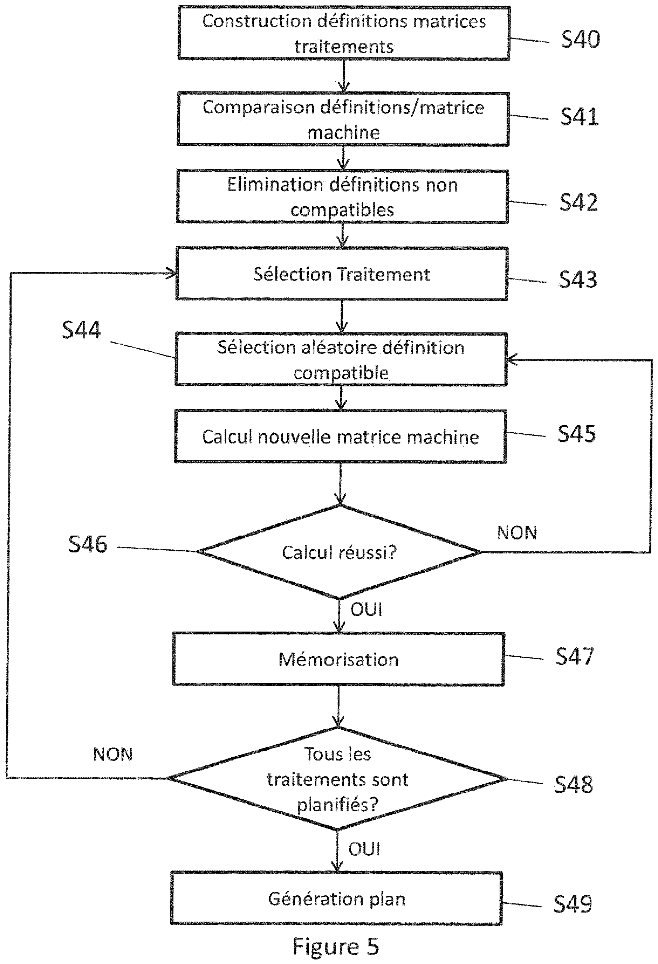

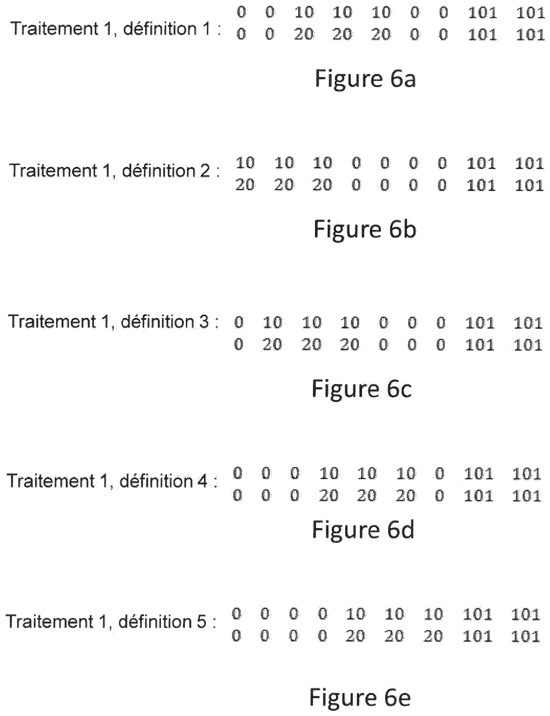

Un exemple de construction du plan d'exécution sur une machine s'effectue de la façon suivante (Figure 5):
Lors d'une étape S40, l'ensemble des définitions de matrices possibles pour l'ensemble des traitements sont construites. Celles-ci représentent les consommations de ressources étalées sur l'ensemble des plages horaires. Par exemple, cinq définitions de matrices possibles pour un traitement T1 sont élaborées (Figures 6a, 6b, 6c, 6d, 6e):
Lors de l'étape S41 les définitions sont comparées avec la matrice machine (figure 4) afin de mesurer leur compatibilité avec la machine.

Le module de construction de plan élimine ensuite, lors de l'étape S42, les définitions non compatibles, dans l'exemple présenté les traitements des figure 6b et 6c.

Lors de l'étape S43, le module de construction de plan sélectionne un premier traitement. Parmi les définitions de matrices restantes pour ce traitement, une définition est choisie de façon aléatoire.

Le module de construction de plan recalcule ensuite la matrice machine lors de l'étape S45.

Si le calcul est réussi, c'est-à-dire que les ressources machines sont suffisantes pour ladite définition, on mémorise la définition choisie.

Sinon, on présélectionne une autre définition de façon aléatoire parmi les définitions restantes et le module de construction de plan réitère les étapes S45 et S46.

Une fois la définition compatible d'un traitement mémorisée, le module de construction de plan effectue les étapes S43, S44, S45, S46 et S47 tant que tous les traitements n'ont pas été planifiés.

A l'issue de l'étape S48, le module de construction de plan génère le plan d'exécution, résultat des calculs matriciels entre les définitions mémorisées des traitements et la matrice machine.

Par le vocable interface homme-machine, on entend tout élément permettant à un être humain de dialoguer avec un ordinateur en particulier et sans que cette liste soit exhaustive, un clavier et des moyens permettant en réponse aux ordres entrés au clavier d'effectuer des affichages et éventuellement de sélectionner à l'aide de la souris ou d'un pavé tactile des éléments affichés sur l'écran. Un autre exemple de réalisation est un écran tactile permettant de sélectionner directement sur l'écran les éléments touchés par le doigt ou un objet et éventuellement avec la possibilité d'afficher un clavier virtuel. Un deuxième exemple de réalisation est l'utilisation d'une caméra enregistrant les déplacements de l'œil de l'utilisateur et utilisant ces informations pour mettre en surbrillance l'élément pointé par l'œil de l'utilisateur et un mouvement supplémentaire de l'œil ou de la tête ou d'une partie du corps ou un actionnement d'une touche, ou l'effleurement d'une zone de l'écran validant la sélection ainsi faite. Un autre exemple d'interface homme-machine peut être une commande vocale permettant d'afficher des éléments et ensuite de valider la sélection d'un élément. Ces exemples étant purement illustratifs mais non limitatifs sur les solutions possibles dans l'avenir pour sélectionner des éléments et les déclarer au module d'activation et de liaison pour que ce dernier remplisse sa tache.

Ainsi comme on peut le comprendre, la présente invention se présente comme un mécanisme de procédé permettant d'optimiser les plannings de traitements par lot.

La première étape consiste à mesurer l'empreinte à vide de toutes les machines impactées par les traitements par lot (E1). C'est-à-dire la consommation des ressources des machines sans qu'aucun traitement ne soit en cours, où qu'aucune action utilisateur n'ait lieu.

La deuxième étape consiste à mesurer l'empreinte de chaque traitement sur l'ensemble des machines (E2) qu'il impacte en soustrayant des consommations mesurées celles de la première étape sur la même période.

Ces deux premières étapes permettent d'obtenir un référentiel des besoins en termes de ressources (1) de la chaine applicative sans activité et lors de l'exécution du traitement et de mémoriser ce référentiel.

La troisième étape consiste à créer des règles d'exécution (E3). Les règles peuvent être aussi différentes que :
- le traitement A doit s'exécuter avant le traitement B,
- le traitement C doit démarrer avant une heure précise,
- le traitement D doit se terminer avant une heure précise,
- la consommation de la ressource X de la machine 1 ne peut dépasser Y %,
- la machine 2 doit être entièrement disponible pour les actions utilisateur à partir d'une heure précise
- etc...

Ces règles d'exécution peuvent se présenter sous forme de tableaux matriciels traitements Ti et machines MJ.

La quatrième étape consiste à construire un plan d'exécution (E4) avec l'ensemble des éléments collectés par exemple sous forme matricielle durant les étapes précédentes et dans le respect des règles d'exécution déterminées dans la troisième étape.

La cinquième étape consiste à jouer le plan d'exécution (E5) prédéterminé, et à vérifier (E6) que l'ensemble des règles est respecté et que les consommations de ressources sont bien au niveau attendu.

Si certaines venaient à ne pas l'être, les empreintes pourraient être revues à la hausse ou à la baisse, ou certaines règles ajoutées afin d'établir un nouveau plan d'exécution qui sera rejoué dans une nouvelle itération de la cinquième étape. On itérera ainsi jusqu'à avoir un plan d'exécution qui respecte l'ensemble des règles d'exécution.

L'invention n'est pas limitée aux modes de réalisation précédemment décrits à titre d'exemple et des variantes de réalisation correspondant au cadre défini par les revendications pourraient être envisagées sans sortir du cadre de l'invention.

## Revendications

1. Dispositif comprenant au moins une machine informatique et un logiciel pour mettre en œuvre un mécanisme de création de plannings de traitements par lot, optimisés pour une infrastructure informatique comportant une pluralité de machines, dispositif étant constitué par :
- un agencement matériel et logiciel de mémorisation d'un référentiel ressource (1) et d'un référentiel réglementaire (2), tel que le référentiel ressource (1) est constitué par :
- un agencement matériel et logiciel permettant la mesure, par des sondes de consommation (4), de l'empreinte à vide (11) de chaque machine impactée par les traitements par lot;
- un agencement matériel et logiciel permettant d'une part la mesure, par des sondes de consommation, de l'empreinte de chaque traitement par lot (12) sur chaque machine, en soustrayant de consommations mesurées celles de l'empreinte à vide sur une même période et d'autre part le calcul de l'empreinte totale sur l'ensemble des machines que les traitements impactent, puis la mémorisation de cette empreinte totale dans le référentiel ressource,
- le référentiel réglementaire (2) permettant de mémoriser des règles d'exécution et des niveaux de consommation attendus
- un module de construction d'un plan d'exécution (3) optimisé avec l'ensemble des éléments collectés par le référentiel ressource (1) et dans le respect des règles d'exécution déterminées par le référentiel réglementaire (2) et
- un agencement matériel et logiciel permettant l'exécution du plan d'exécution construit (3), et de vérification que l'ensemble des règles d'exécution est respecté et que les consommations de ressources des machines, que les traitements par lot impactent, sont bien au niveau attendu.

2. Dispositif selon la revendication 1 **caractérisé en ce que** le référentiel réglementaire est constitué par l'utilisation d'une interface homme-machine (20) permettant de créer des règles d'exécution applicables pour chaque traitement par lot Ti et de les enregistrer en mémoire pour constituer le référentiel réglementaire (2).

3. Dispositif selon l'une des revendications 1 à 2 **caractérisé en ce que** le référentiel réglementaire est constitué d'au moins un tableau matriciel mémorisé correspondant à chaque traitement Ti appliqué sur une ou plusieurs ressources d'une machine MJ, dont le nombre de ressource défini une dimension du tableau matriciel, le nombre de plages horaires affectées définissant une autre dimension du tableau matriciel, et les pourcentages d'utilisation de la ressource, des valeurs « 101 » représentatives de la non activité, « 0 » de l'activité de la ressource constituant les coefficients du tableau matriciel ou « 99 » de la non compatibilité du traitement avec un autre traitement constituant le coefficient d'une ligne ou colonne supplémentaire.

4. Dispositif selon l'une des revendications 1 à 3 **caractérisé en ce que** le référentiel ressource est constitué à l'aide d'une interface homme-machine (20) permettant de créer des règles de pourcentages d'utilisation de chaque ressource d'une machine applicable pour chaque traitement par lot et de les enregistrer en mémoire pour constituer le référentiel ressource (1).

5. Dispositif selon la revendication 4 **caractérisé en ce que** le référentiel ressource est constitué d'un tableau matriciel mémorisé pour chaque machine MJ dont une dimension est constitué par le nombre des différentes ressources de la machine, et l'autre dimension par le nombre de plage horaire d'utilisation de la machine et les coefficients définissant en fonction de la ressource et de la plage horaire l'état les taux d'occupations de chaque équipement de la machine et pour les autres coefficient « 0 » l'état non occupé de la ressource.

6. Dispositif selon la revendication 2 **caractérisé en ce que** I'IHM (20) qui intervient dans la définition du Référentiel règlementaire (2) permet de :
• Définir et mémoriser les restrictions horaires de chaque traitement.
• Définir et mémoriser les limites maximales acceptables de consommations de ressources pour chaque serveur composant la chaine de liaison
• Définir et mémoriser les règles d'ordonnancement inter traitements

7. Dispositif selon une des revendications 1 à 6 **caractérisé en ce que** les règles définies peuvent être aussi variées et différentes que :
• le traitement A doit s'exécuter avant le traitement B,
• le traitement C doit démarrer avant une heure précise,
• le traitement D doit se terminer avant une heure précise,
• la consommation de la ressource X de la machine 1 ne peut dépasser Y %,
• la machine 2 doit être entièrement disponible pour les actions utilisateur à partir d'une heure précise

8. Dispositif selon une des revendications 1 à 7 **caractérisé en ce qu'**il comporte une deuxième Interface Homme Machine (IHM 2) (10) permettant de définir les sondes de consommation (4) sur chaque machines qui remontent les métriques (5) provenant de l'utilisation des ressources de la machine, ainsi que les seuils d'acceptabilité associé à chaque sonde.

9. d'optimisation de plannings de traitements par lot sur une infrastructure informatique comportant une pluralité de machines, mis en œuvre par un logiciel exécuté sur au moins une machine de l'infrastructure informatique qu'il comporte :
- une étape de mesure de l'empreinte à vide de chaque machine impactée par les traitements par lot (E1);
- une étape de mesure de l'empreinte de chaque traitement par lot sur chaque machine que le traitement par lot impacte, en soustrayant de consommations mesurées celles de la première étape de mesure sur une même période et calcul de l'empreinte totale sur l'ensemble des machines que les traitements par lot impactent, puis la mémorisation de cette empreinte totale (E2);
- une étape de mémorisation de règles d'exécution et de niveaux de consommations attendus (E3);
- une étape de construction d'un plan d'exécution avec l'ensemble des éléments collectés durant les étapes précédentes et dans le respect des règles d'exécution mémorisées (E4);
- une étape d'exécution du plan d'exécution construit et de vérification que l'ensemble des règles d'exécution est respecté et que les consommations de ressources sont bien au niveau attendu (E5).

10. Procédé d'optimisation de plannings de traitements par lot sur une infrastructure informatique selon la revendication 9 10 **caractérisé en ce que** la construction du plan d'exécution s'effectue :
• à partir du référentiel ressource (1) et réglementaire (2), en déterminant le plan d'exécution optimum visant à réduire le temps global d'exécution tout en maximisant l'utilisation des ressources disponibles.
• et en déterminant le niveau de ressource théoriquement utilisées lors de l'exécution de l'ensemble du plan

11. Procédé d'optimisation de plannings de traitements par lot sur une infrastructure informatique selon la revendication 9 ou 10 **caractérisé en ce que** la vérification (E6) s'effectue :
en comparant le niveau utilisé de ressources à celui calculé précédemment pour tenir compte de l'incidence de l'exécution des traitements en parallèle avec si nécessaire une modification du référentiel réglementaire (2), si certaines règles ne sont pas respectées lors de l'exécution.

## Patentansprüche

1. Vorrichtung, umfassend mindestens eine Computermaschine und eine Software zum Implementieren eines Mechanismus zum Erzeugen von Batchverarbeitungsplänen, die für eine Computerinfrastruktur optimiert sind, die eine Vielzahl von Maschinen umfasst, wobei die Vorrichtung gebildet wird aus:
- einer Hardware- und Software-Anordnung zur Speicherung eines Ressourcen-Repositorys (1) und eines Regulierungs-Repositorys (2),
- so dass das Ressourcen-Repository (1) gebildet wird aus:
- einer Hardware- und Software-Anordnung zum Messen, mit Hilfe von Verbrauchssonden (4), des Leerlauf-Fußabdrucks (11) jeder Maschine, die von den Batchverarbeitungen betroffen ist;
- einer Hardware- und Software-Anordnung, einerseits zum Messen des Fußabdrucks jeder Batchverarbeitung (12) auf jeder Maschine mit Hilfe von Verbrauchssonden, indem von den gemessenen Verbräuchen diejenigen des Leerlauf-Fußabdrucks während desselben Zeitraums substrahiert werden, und andererseits zum Berechnen des gesamten Fußabdrucks auf allen Maschinen, die von den Verarbeitungen betroffen sind, und dann zum Speichern dieses gesamten Fußabdrucks im Ressourcen-Repository,
- dem Regulierungs-Repository (2) zum Speichern der Ausführungsregeln und den erwarteten Verbrauchsmengen
- einem Modul zum Erstellen eines optimierten Ausführungsplans (3) mit allen vom Ressourcen-Repository (1) gesammelten Elementen und in Übereinstimmung mit den vom Regulierungs-Repository (2) bestimmten Ausführungsregeln und
- einer Hardware- und Software-Anordnung zum Ausführen des erstellten Ausführungsplans (3) und zum Überprüfen, ob alle Ausführungsregeln eingehalten werden und ob der Ressourcenverbrauch der Maschinen, die von den Batchverarbeitungen betroffen sind, bei der erwarteten Menge liegt.

2. Vorrichtung nach Anspruch 1, **dadurch gekennzeichnet, dass** das Regulierungs-Repository durch die Verwendung einer Mensch-Maschine-Schnittstelle (20) zum Erstellen von Ausführungsregeln, die für jede Batchverarbeitung Ti anwendbar sind, und zum Speichern derselben in einem Speicher gebildet wird, um das Regulierungs-Repository (2) zu bilden.

3. Vorrichtung nach einem der Ansprüche 1 bis 2, **dadurch gekennzeichnet, dass** das Regulierungs-Repository aus mindestens einer gespeicherten Matrixtabelle gebildet wird, die jeder Verarbeitung Ti entspricht, die auf eine oder mehrere Ressourcen einer Maschine MJ angewandt wird, deren Anzahl der Ressourcen eine Dimension der Matrixtabelle, wobei die Anzahl der zugewiesenen Zeitbereiche eine andere Dimension der Matrixtabelle definiert, und die Prozentsätze der Nutzung der Ressource definiert, wobei die Werte "101" für die Nichtaktivität, "0" für die Aktivität der Ressource die Koeffizienten der Matrixtabelle bilden, oder "99" für die Nichtkompatibilität der Verarbeitung mit einer anderen Verarbeitung den Koeffizienten einer zusätzlichen Zeile oder Spalte bilden.

4. Vorrichtung nach einem der Ansprüche 1 bis 3, **dadurch gekennzeichnet, dass** das Ressourcen-Repository mit Hilfe einer Mensch-Maschine-Schnittstelle (20) zum Erstellen von Regeln für die prozentuale Nutzung jeder Ressource einer Maschine, die für jede Batchverarbeitung anwendbar ist, und zum Speichern derselben in einem Speicher gebildet wird, um das Ressourcen-Repository (1) zu bilden.

5. Vorrichtung nach Anspruch 4, **dadurch gekennzeichnet, dass** das Ressourcen-Repository aus einer für jede Maschine MJ gespeicherten Matrixtabelle gebildet wird, deren eine Dimension aus der Anzahl der verschiedenen Ressourcen der Maschine und die andere Dimension aus der Anzahl der Zeitbereiche, in denen die Maschine benutzt wird, gebildet wird und wobei die Koeffizienten in Abhängigkeit von der Ressource und dem Zeitbereich den Zustand der Belegungsraten jeder Ausrüstung der Maschine und für die anderen Koeffizienten "0" den nicht belegten Zustand der Ressource definieren.

6. Vorrichtung nach Anspruch 2, **dadurch gekennzeichnet, dass** die Mensch-Maschine-Schnittstelle (HMI) (20), die in die Definition des Regulierungs-Repositorys (2) eingreift, ermöglicht:
• Definieren und Speichern der Zeitbeschränkungen für jede Verarbeitung
• Definieren und Speichern der maximal zulässigen Ressourcenverbrauchsgrenzen für jeden Server in der Verbindungskette
• Definieren und Speichern der Regeln für die Planung zwischen den Verarbeitungen

7. Vorrichtung nach einem der Ansprüche 1 bis 6, **dadurch gekennzeichnet, dass**
die definierten Regeln so vielfältig und unterschiedlich sein können, dass:
• die Verarbeitung A vor der Verarbeitung B durchgeführt werden muss,
• die Verarbeitung C vor einem bestimmten Zeitpunkt beginnen muss,
• die Verarbeitung D vor einem bestimmten Zeitpunkt abgeschlossen sein muss,
• der Verbrauch der Ressource X von Maschine 1 Y % nicht überschreiten darf,
• die Maschine 2 ab einem bestimmten Zeitpunkt vollständig für Benutzeraktionen verfügbar sein muss

8. Vorrichtung nach einem der Ansprüche 1 bis 7, **dadurch gekennzeichnet, dass** sie
eine zweite Mensch-Maschine-Schnittstelle (HMI 2) (10) zum Definieren der Verbrauchssonden (4) auf jeder Maschine, die die aus der Nutzung der Maschinenressourcen stammenden Metriken (5) sowie die mit jeder Sonde verbundenen Akzeptanzschwellen zurückmelden.

9. Verfahren zur Optimierung von Batchverarbeitungsplänen auf einer Computerinfrastruktur, umfassend eine Vielzahl von Maschinen, implementiert durch eine Software, die auf mindestens einer Maschine der Computerinfrastruktur ausgeführt wird, die Folgendes umfasst:
- einen Schritt zum Messen des Leerlauf-Fußabdrucks jeder Maschine, die von den Batchverarbeitungen betroffen ist (E1);
- einen Schritt zum Messen des Fußabdrucks jeder Batchverarbeitung auf jeder Maschine, die von der Batchverarbeitung betroffen ist, indem von den gemessenen Verbräuchen diejenigen des ersten Messschritts über einen gleichen Zeitraum substrahiert werden, und zum Berechnen des gesamten Fußabdrucks auf allen Maschinen, die von den Batchverarbeitungen betroffen sind, berechnet wird, und dann zum Speichern dieses gesamten Fußabdrucks (E2);
- einen Schritt zum Speichern von Ausführungsregeln und erwarteten Verbrauchsmengen (E3);
- einen Schritt zum Erstellen eines Ausführungsplans mit allen in den vorangegangenen Schritten gesammelten Elementen und in Übereinstimmung mit den gespeicherten Ausführungsregeln (E4);
- einen Schritt zum Ausführen des erstellten Ausführungsplans und zum Überprüfen, ob alle Ausführungsregeln eingehalten werden und ob der Ressourcenverbrauch bei der erwarteten Menge liegt (E5).

10. Verfahren zur Optimierung von Batchverarbeitungsplänen auf einer Computerinfrastruktur nach Anspruch 9 10, **dadurch gekennzeichnet, dass** die Erstellung des Ausführungsplans durchgeführt wird:
• vom Ressourcen-Repository (1) und dem Regulierungs-Repository (2) aus, um den optimalen Ausführungsplan zu bestimmen, der darauf abzielt, die Gesamtausführungszeit zu reduzieren und gleichzeitig die Nutzung der verfügbaren Ressourcen zu maximieren.
• und durch Bestimmung der Menge der theoretisch für die Ausführung des gesamten Plans verwendeten Ressourcen.

11. Verfahren zur Optimierung von Batchverarbeitungsplänen auf einer Computerinfrastruktur nach Anspruch 9 oder 10, **dadurch gekennzeichnet, dass** die Überprüfung (E6) durchgeführt wird:
durch den Vergleich der verbrauchten Menge an Ressourcen mit der zuvor berechneten, um die Auswirkungen der parallelen Ausführung der Verarbeitungen zu berücksichtigen, gegebenenfalls mit einer Änderung des Regulierungs-Repositorys (2), wenn einige Regeln während der Ausführung nicht eingehalten werden.

## Claims

1. A device comprising at least one computer machine and software to implement a mechanism for creating batch process schedules, optimized for a computing infrastructure comprising a plurality of machines, the device consisting of:
- a hardware and software arrangement for storing a resource repository (1) and a regulatory repository (2),
- such that the resource repository (1) consists of:
- a hardware and software arrangement facilitating the measurement, by consumption sensors (4), of the empty imprint (11) of each machine impacted by the batch processes;
- a hardware and software arrangement allowing on the one hand the measurement, by consumption sensors, of the imprint of each batch process (12) on each machine, by subtracting from measured consumptions those of the empty imprint over the same period and on the other hand the calculation of the total imprint on all of the machines impacted by the processes, then storing this total imprint in the resource repository,
- the regulatory repository (2) making it possible to store execution rules and expected consumption levels
- a module for constructing an optimized execution plan (3) with all of the elements collected by the resource repository (1) and in compliance with the execution rules determined by the regulatory repository (2) and
- a hardware and software arrangement allowing the execution of the constructed execution plan (3), and the verification that all the execution rules are respected and that the resource consumption of the machines, impacted by the batch processes, is indeed at the expected level.

2. The device according to claim 1 **characterized in that** the regulatory repository is constituted by using a human-machine interface (20) making it possible to create applicable execution rules for each batch process Ti and to store them in the memory in order to constitute the regulatory repository (2).

3. The device according to one of claims 1 to 2 **characterized in that** the regulatory repository consists of at least one stored matrix table corresponding to each process Ti applied to one or more resources of a machine MJ, the number of resources of which defines one dimension of the matrix table, the number of allocated time slots defines another dimension of the matrix table, and the percentages of use of the resource, values "101" representing non-activity, "0" the activity of the resource constituting the coefficients in the matrix table or "99" the non-compatibility of the process with another process constituting the coefficient of an additional row or column.

4. The device according to one of claims 1 to 3 **characterized in that** the resource repository is constituted using a human-machine interface (20) making it possible to create rules of percentages of use of each resource of a machine applicable for each batch process and to store them in the memory in order to constitute the resource repository (1).

5. The device according to claim 4 **characterized in that** the resource repository consists of a stored matrix table for each machine MJ one dimension of which consists of the number of different resources of the machine, and the other dimension consists of the number of time slots of use of the machine and the coefficients defining, depending on the resource and the time slot, the state of the occupancy rates of each equipment of the machine and for the other "0" coefficients the unoccupied state of the resource.

6. The device according to claim 2 **characterized in that** the HMI (20) which is involved in defining the regulatory repository (2) makes it possible to:
• Define and store the time restrictions of each process.
• Define and store the maximum acceptable limits of resource consumption for each server comprising the link chain
• Define and store the inter-process scheduling rules

7. The device according to one of claims 1 to 6 **characterized in that** the defined rules can be so varied and different that:
• process A must be executed before process B,
• process C must start before a specific time,
• process D must end before a specific time,
• the consumption of the resource X of the machine 1 cannot exceed Y%,
• the machine 2 must be fully available for user actions from a specific time

8. The device according to one of claims 1 to 7 **characterized in that** it
comprises a second Human-Machine Interface (HMI 2) (10) making it possible to define the consumption sensors (4) on each machine which report metrics (5) from the use of resources of the machine, as well as the acceptability thresholds associated with each sensor.

9. A method for optimizing batch processing schedules on a computing infrastructure comprising a plurality of machines, implemented by software executed on at least one machine of the computing infrastructure **characterized in that** it comprises:
- a step of measuring the empty imprint of each machine impacted by the batch processes (E1);
- a step of measuring the imprint of each batch process on each machine impacted by the batch process, by subtracting from measured consumptions that of the first measuring step over a same period and calculating the total imprint across all the machines impacted by the batch processes, then storing this total imprint (E2);
- a step of storing the execution rules and the expected consumption levels (E3);
- a step of constructing an execution plan with all the elements collected during the previous steps and in compliance with the stored execution rules (E4);
- a step of executing the constructed execution plan and of verifying that all the execution rules are respected and that the consumption of resources is indeed at the expected level (E5).

10. The method for optimizing batch process schedules on a computing infrastructure according to claim 9 or 10 **characterized in that** the construction of the execution plan is performed:
• from the resource (1) and regulatory (2) repository, by determining the optimum execution plan aiming to reduce the overall execution time whilst maximizing the use of available resources.
• and by determining the resource level theoretically used during the execution of the entire plan

11. The method for optimizing batch process schedules on a computing infrastructure according to claim 9 or 10 **characterized in that** the verification (E6) is performed:
by comparing the level of resources used with the one previously calculated to take into account the impact of performing parallel processing with, if necessary, a modification of the regulatory repository (2), if certain rules are not respected during the execution.
